(19) Europäisches Patentamt
European Patent Office
Office européen des brevets

(11) **EP 3 008 025 B1**

(12) **FASCICULE DE BREVET EUROPEEN**

(45) Date de publication et mention de la délivrance du brevet:
**23.06.2021 Bulletin 2021/25**

(21) Numéro de dépôt: **14730464.6**

(22) Date de dépôt: **28.05.2014**

(51) Int Cl.:
**C03C 17/34** *(2006.01)*

(86) Numéro de dépôt international:
**PCT/EP2014/061083**

(87) Numéro de publication internationale:
**WO 2014/198543 (18.12.2014 Gazette 2014/51)**

(54) **SUBSTRAT VERRIER À FAIBLE ÉMISSIVITÉ**

GLASSUBSTRAT MIT NIEDRIGER EMISSIVITÄT

GLASS SUBSTRATE WITH LOW EMISSIVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.06.2013 BE 201300402**

(43) Date de publication de la demande:
**20.04.2016 Bulletin 2016/16**

(73) Titulaire: **AGC Glass Europe**
**1348 Louvain-La-Neuve (BE)**

(72) Inventeurs:
• **HAYASHI, Hideaki**
**Tokyo 100-8405 (JP)**

• **MICHEL, Eric**
**B-4000 Glain (BE)**
• **TIXHON, Eric**
**B-4367 Crisnée (BE)**

(74) Mandataire: **AGC Glass Europe**
**Technovation Centre**
**Intellectual Property Department**
**Rue Louis Blériot 12**
**6041 Gosselies (BE)**

(56) Documents cités:
**WO-A1-2012/160075      FR-A1- 2 973 023**
**US-A- 4 419 386       US-A1- 2005 196 623**
**US-A1- 2010 255 225**

• **None**

**Description**

La présente invention a trait à des substrats verriers transparents revêtus de couches basse émissives. Plus particulièrement, l'invention concerne un vitrage comportant une couche basse émissive sur une face exposée à l'extérieur.

Les vitrages selon cette invention peuvent avoir diverses applications. Ils peuvent notamment être utilisés dans le domaine des vitrages automobiles, dans le domaine des vitrages architecturaux et dans le domaine de l'électroménager.

Il est bien connu qu'un vitrage peut se couvrir de buée ou de givre lorsque la température d'une de ses surfaces passe en dessous de la température de condensation de l'air humide à laquelle cette surface est exposée. La formation de buée ou de givre à la surface exposée d'un vitrage isolant est fréquente sur des vitrages multiples isolants à haute performance. De manière générale, pour bon nombre de ces applications, ce sont des vitrages multiples comportant au moins deux vitres en verre. Ces vitres sont disposées à distance l'une de l'autre, définissant un ou plusieurs espaces intermédiaires. Les cas échéant une ou plusieurs vitres comportent une couche d'isolation thermique sur une face orientée vers un espace intermédiaire. Pour d'autres applications, ce sont des simples vitrages ou des vitrages feuilletés. Ceci est particulièrement le cas pour les applications automobiles où la formation de givre à la surface extérieure est particulièrement problématique. Dans le cas des meubles frigorifiques et congélateurs la buée ou le givre se forment à la surface exposée au froid.

Grâce à l'isolation thermique les déperditions de chaleur à travers le vitrage de l'intérieur vers l'extérieur diminuent et en conséquence la probabilité que la température de la surface extérieure du vitrage isolant descende pendant la nuit en dessous du point de condensation augmente. Ceci est particulièrement le cas lorsque le vitrage est exposé au ciel nocturne, dépourvu de nuages.

Il est aussi connu que la température de surface d'un vitrage peut être influencée par la présence d'un revêtement qui la recouvre et en modifie l'émissivité.

La face tournée vers l'extérieur de la vitre extérieure du vitrage multiple peut ainsi être recouverte d'un revêtement bas émissif. Ce revêtement bas émissif a pour effet de diminuer le refroidissement de la face du verre tournée vers l'extérieur. Ainsi le risque que la température de cette surface passe en dessous de la température de condensation de l'air humide à laquelle elle est exposée est diminué. Ce revêtement bas-émissif réduit alors l'apparition de buée ou de givre sur la face extérieure du vitrage isolant, on dit qu'il a un effet anti-buée ou anti-givre.

Les revêtements bas émissifs peuvent être déposés par pulvérisation cathodique assistée par magnétron. Ces revêtements comportent alors souvent une ou plusieurs couches d'argent, mais elles peuvent aussi comporter des oxydes dopés. Le désavantage de ces revêtements déposés par pulvérisation cathodique assisté par magnétron est qu'ils sont mécaniquement peu stables et qu'ils nécessitent une étape de procédé supplémentaire tel que par exemple un traitement thermique pour être suffisamment résistants mécaniquement et/ou chimiquement pour une exposition à la face extérieure d'un vitrage.

D'autres procédés connus pour le dépôt de revêtements bas émissifs sont le spray pyrolytique et le dépôt chimique par phase vapeur (CVD, « chemical vapor deposition »). La CVD consiste à envoyer, sur un substrat chaud, des réactifs chimiques ou précurseurs, préalablement vaporisés et qui se décomposent par pyrolyse au contact du substrat chaud.

Ce procédé est couramment appliqué en ligne lors de la production du verre flotté. Dans ce mode de production la réaction des précurseurs gazeux s'effectue dans l'enceinte de formation de la feuille de verre ou immédiatement à la sortie de celle-ci de manière à profiter de la température élevée du substrat. Ce procédé peut aussi être appliqué sur une ligne séparée ou le verre prédécoupé est réchauffé pour permettre le dépôt des revêtements.

On obtient ainsi des couches minces (de l'ordre de quelques dizaines ou centaines de nm), notamment d'oxydes, de grand intérêt pratique. Les couches obtenues sont souvent cristallines, denses, d'une grande pureté et généralement très stables chimiquement ainsi que mécaniquement. Cette stabilité est essentielle pour des applications où la couche se trouve exposée.

Des variantes de la CVD, notamment la CVD assistée par plasma peuvent présenter certains avantages tels que le dépôt à plus basse température, des rendements de dépôt plus élevés et un choix de précurseurs différents.

Des produits verriers portant un revêtement bas émissif déposé par CVD sont bien connus. Ils s'agit en général des couches à base d'oxyde d'étain ($SnO_2$) dopé à l'antimoine ($SnO_2$ :Sb) ou au fluor ($SnO_2$:F). Les couches qui se trouvent sur le marché aujourd'hui ont en général des épaisseurs comprises entre 250 et 500nm. Elles ont une émissivité allant de 0.10 à 0.19 et montrent un bon effet anti-buée dans une large gamme de conditions météorologiques. Cependant ces couches présentent une rugosité importante.

Cette rugosité apporte de nombreux désavantages. Entre autres elle crée un niveau de voile (Haze) important de 0.5 à 1%. Elle augmente aussi la probabilité d'encrassement de la surface lors de l'exposition à l'environnement et rend le nettoyage difficile. La rugosité fait aussi que le contact avec des pièces métalliques laisse des traces ayant l'aspect de griffes lors de manipulations ultérieures. Cette griffabilité importante est par exemple particulièrement problématique lorsque la couche entre en contact avec des rouleaux transporteurs lors de la trempe ou lors du dépôt de couches par pulvérisation magnétron sur la face opposée à la couche d'oxyde d'étain. Le nettoyage est aussi rendu plus difficile lorsque le coefficient de friction de la surface est trop élevé.

La rugosité de ces couches d'une épaisseur entre 250 et 500nm peut être diminuée par des procédés de polissage connus. Ces procédés peuvent être appliqués directement sur une ligne float ou sur une ligne de polissage séparée. A partir de ces couches on arrive à réduire la rugosité $R_q$ jusqu'à ~7nm. Or à ce niveau de rugosité les traces laissées par le contact de ces couches avec des pièces métalliques sont encore trop importantes. D'autre part le niveau de voile de ces couches descend après polissage difficilement en dessous de 0.3% et reste donc très visible. Il serait possible de lisser davantage ces couches en prolongeant la durée du polissage, mais cela présente d'une part des coûts supplémentaires importants et d'autre part on augmente le risque d'apparition de griffes de polissage. En effet, lorsque la couche se trouve sur la face extérieure d'un multiple vitrage, il est apparu que toutes les faiblesses esthétiques sont beaucoup plus voyantes que pour une couche orientée vers un des espaces intermédiaires d'un vitrage multiple.

Un deuxième désavantage majeur de ces couches est leur faible transmission. Ceci pèse sur la transmission dans le visible et aussi sur le facteur solaire, surtout lorsqu'un substrat verrier revêtu de ces couches est incorporé dans des vitrages multiples à deux vitres ou plus. Dans un double vitrage classique avec une couche isolante déposée par pulvérisation magnétron sur une des faces orientées vers la cavité du double vitrage, le rajout d'une couche anti-buée à base d'oxyde d'étain dopée au fluor d'épaisseur 300nm résulte en une perte de plusieurs pourcents de transmission lumineuse et de facteur solaire. Idéalement le rajout d'une couche anti-buée sur un vitrage multiple devrait avoir un impact minimal sur la transmission, voire aucun impact du tout.

Un troisième désavantage des substrats verriers revêtus de ces couches est la stabilité des couleurs en réflexion à différents angles d'observation. La stabilité de la couleur, de surcroît neutre, est établie par le calcul de $\Delta a^*b^*$ en réflexion. Plus cette valeur est faible, plus la neutralité de la couleur est conservée à divers angles d'observation. Les valeurs de $\Delta a^*b^*_{(75°)}$ calculées pour les substrats verriers revêtus de ces couches sont de l'ordre de 3.5 ou plus, ce qui est trop élevé.

Les documents FR 2 973 023, US 2010/0255225, US 4 419 386 et US 2005/0196623 décrivent des couches fonctionnelles à base d'oxyde d'étain dopé au fluor.

Le document A. Werner, A. Roos, Optical Materials 30 (2008) p. 968-978 (Werner et al.), décrit des simulations optiques de couches à base d'oxyde d'étain dopé au fluor sur la face externe de vitrages isolants multiples à deux ou trois vitres destinées à limiter la formation de buée. Une couche basse émissive à base d'argent se trouve sur la face de la vitre intérieure du multiple vitrage tournée vers l'espace intermédiaire entre deux vitres. L'effet de la diminution de l'épaisseur de la couche d'oxyde d'étain sur l'augmentation de la transmission a été étudiée. Ces couches ont été simulées avec certaines épaisseurs de 50, 100, 150, 200 et 250nm. Les auteurs obtiennent des émissivités de 0.2 à 0.5. L'émissivité de ces couches est donc moins basse que pour les couches plus épaisses que l'on trouve dans le commerce ce qui résulte en une légère réduction de l'effet anti-buée. Les auteurs de cette publication recommandent de compenser la réduction de l'effet anti-buée liée à l'augmentation de l'émissivité par une couche supplémentaire de $TiO_2$ photocatalytique. Cette couche serait efficace pour étaler à la surface du verre la buée qui s'y forme et empêcherait l'apparition de gouttelettes de buée visibles à l'œil nu.

Cette solution est peu satisfaisante pour plusieurs raisons.

Particulièrement la stabilité angulaire des couleurs en réflexion des empilages individuels simulés avec des épaisseurs de telles que décrites dans le document de Werner et al. n'est pas suffisante.

Il s'avère aussi que la simple réduction de l'épaisseur de la couche d'oxyde d'étain résultera dans le procédé de dépôt par CVD en une couche qui est toujours rugueuse avec tous les désavantages que cela entraîne. La couche sera donc toujours sensible au contact avec des pièces métalliques et aux salissures et difficile à laver.

L'ajout d'une couche de $TiO_2$ suggéré par les auteurs, même si elle est de faible épaisseur, augmentera sensiblement le coût de production et fait perdre une partie importante de la transmission à cause de la réflexion qui augmente. Cette couche de $TiO_2$ a aussi pour effet d'augmenter le niveau de voile de l'empilage à cause de son indice de réfraction qui est supérieur à celui du $SnO_2$.

Selon un de ses aspects, la présente invention a pour objet un vitrage isolant multiple selon la revendication 1, les revendications dépendantes présentant des modes de réalisation préférés.

L'invention porte sur un substrat verrier revêtu d'un empilage de couches comprenant, dans l'ordre, au moins (i) un substrat transparent, (ii) une sous-couche de neutralisation de couleurs en réflexion et (iii) une couche fonctionnelle, de faible émissivité, constituée essentiellement d'oxyde d'étain dopé au fluor dont l'épaisseur est comprise entre 160nm et 190nm, préférentiellement entre 160nm et 180nm et présente une rugosité $Rq$ inférieure ou égale à 7nm, préférentiellement inférieure ou égale à 6nm.

De tels substrats verriers, grâce à la sélection particulière des matériaux constitutifs des couches de l'empilage réalisé sur le substrat de verre, à l'épaisseur de ces couches et à la rugosité de la couche fonctionnelle, peuvent ainsi présenter un ou plusieurs des avantages suivants:

- une transmission dans les longueurs d'onde du visible élevée

- un facteur solaire élevé

- un effet anti-buée significatif

- une couleur neutre en réflexion

- une grande stabilité de la couleur en réflexion à différents angles d'observation.

- une grande stabilité de la couleur en réflexion lors de petites variations de l'épaisseur de la couche

- un faible niveau de voile

- une griffabilité et sensibilité au contact avec des pièces métalliques réduites

- un nettoyage plus facile

Ainsi il est possible d'atteindre une transmission lumineuse d'au moins 83.4% (illuminant D65, 2°) et un facteur solaire d'au moins 79.2% (selon la norme EN410 avec la couche en position 1) pour un empilage qui a une émissivité de 0.28 réalisé sur un verre clair de 3.8mm d'épaisseur. Les substrats ainsi revêtus présentent une teinte neutre lorsqu'ils sont examinés en réflexion côté couche, c'est-à-dire que les valeurs de a* et b* (valeurs CIELAB L*a*b* - Illuminant D65 - 10°) sont telles que a*<0, de préférence $-3 \le a^* \le -1$, et b*<0, de préférence. Qui plus est, grâce à la sélection particulière de ce domaine d'épaisseurs de la couche fonctionnelle, cette teinte ne varie quasiment pas avec l'angle d'observation compris entre 8° et 75° et $\Delta a^*b^*_{(75°)}$ est inférieur à 3, de préférence inférieur ou égal à 2.

Dans le cadre de l'invention, la neutralité et la stabilité en réflexion sont observées ou mesurées par rapport au côté extérieur d'un bâtiment, c'est-à-dire côté « position 1». L'homme du métier trouvera tous les détails et toutes les indications relatifs aux mesures de a* et b* dans la littérature, notamment sur la base de travaux de Ray G. Gordon et de R.S. Hunter, tels que décrits dans les brevets US 4,377,613 ; US 4,187,336 et US 4,419,386. La valeur de $\Delta a^*b^*$ est calculée à partir des valeurs a* et b* (valeurs CIELAB L*a*b* - D65 - 10°) mesurées à différents angles d'observation $\alpha$. L'angle d'observation $\alpha$ (choisi entre 8° et 75°) est l'angle de vue de l'observateur ou de l'outil de mesure par rapport à un axe perpendiculaire au vitrage (a = 0°). La valeur $\Delta a^*b^*$ peut être établie pour différents angles d'observation par exemple des angles de 8°, 20°, 30°, 45° et 75°. Ainsi,

$$\Delta a^*b^*_{(20°)} = [(a^*_{8°} - a^*_{20°})^2 + (b^*_{8°} - b^*_{20°})^2]^{1/2}$$

$$\Delta a^*b^*_{(30°)} = [(a^*_{8°} - a^*_{30°})^2 + (b^*_{8°} - b^*_{30°})^2]^{1/2}$$

$$\Delta a^*b^*_{(45°)} = [(a^*_{8°} - a^*_{45°})^2 + (b^*_{8°} - b^*_{45°})^2]^{1/2}$$

$$\Delta a^*b^*_{(75°)} = [(a^*_{8°} - a^*_{75°})^2 + (b^*_{8°} - b^*_{75°})^2]^{1/2}$$

Le substrat transparent est avantageusement un verre clair ou extra-clair, de diverses épaisseurs, typiquement comprises entre 2 mm et 10 mm. Par verre extra-clair, on entend un verre comprenant une teneur maximale en fer, exprimé sous forme de $Fe_2O_3$, inférieure à 0,04% en poids, en particulier inférieure à 0,02% en poids. Par verre clair, on entend un verre comprenant une teneur maximale en fer, exprimé sous forme de $Fe_2O_3$, allant de 0,04 à 0,4% en poids. L'utilisation d'un verre extra-clair est particulièrement intéressante pour augmenter davantage la transmission.

La sous-couche a pour fonction de permettre la neutralisation de la couleur en réflexion de la vitre revêtue, c'est-à-dire éviter les couleurs interférentielles en réflexion, pour l'épaisseur de couche fonctionnelle choisie. Elle est de préférence en contact direct avec le substrat verrier et est avantageusement une mono-couche constituée essentiellement d'oxynitrures de silicium, tel que $SiO_xN_y$, ou d'oxycarbures de silicium, tel que $SiO_xC_y$, x étant inférieur à 2, dont l'indice de réfraction est avantageusement compris dans la plage allant de 1,65 à 1,75, l'épaisseur de cette couche étant de préférence comprise entre 55 et 95 nm. Les valeurs « x » et « y » sont choisies pour ajuster les valeurs des indices de réfraction. Alternativement la sous-couche de neutralisation peut être une couche mixte constituée essentiellement d'oxydes de Sn et Si, dont l'épaisseur est comprise entre 55 et 95 nm, avantageusement entre 60 et 90nm et très avantageusement entre 70 et 90nm.

Dans un autre mode de réalisation de l'invention, la sous-couche est une double couche constituée d'une première sous-couche d'un matériau ayant un indice de réfraction plus élevé que celui du verre comme par exemple le $TiO_2$, le $SnO_2$ ou le ZnO, revêtue d'une deuxième sous-couche ayant un indice de réfraction plus bas que la première sous-couche. Cette deuxième sous-couche est par exemple une couche d'un oxyde de silicium, oxycarbure de silicium, tel que $SiO_xC_y$, ou oxynitrure de silicium, tel que $SiO_xN_y$, x étant inférieur ou égal à 2. L'épaisseur de la première sous-couche est de préférence comprise entre 5 nm et 15 nm lorsqu'il s'agit de $TiO_2$ et de préférence comprise entre 15 nm et 35 nm lorsqu'il s'agit de $SnO_2$ ou de ZnO. L'épaisseur de la deuxième sous-couche est de préférence comprise entre 15 nm et 40 nm lorsqu'il s'agit d'un oxyde, oxycarbure, ou oxynitrure de silicium.

La couche fonctionnelle de faible émissivité qui, dans des modes de réalisation préférés, se trouve disposée directement au-dessus de la sous-couche de neutralisation est essentiellement constituée de $SnO_2$:F. Elle présente avantageusement une émissivité comprise entre 0.20 et 0.50 et elle a une épaisseur comprise entre 160nm et 190nm, préférentiellement entre 160nm et 180nm. Une telle couche est avantageusement fabriquée par des technologies de mise en œuvre classiques, telles que la CVD. Cette couche fonctionnelle présente une rugosité $R_q$ inférieure ou égale à 7nm, encore plus préférentiellement inférieure ou égale à 6nm.

La rugosité $R_q$ est la moyenne quadratique des écarts de hauteur $z$ sur la surface d'évaluation et mesurés par rapport à la hauteur moyenne $z$.

La moyenne quadratique des écarts d'un profil est évaluée par microscope à force atomique (AFM) sur une surface de 10μm fois 10μm en N = 512 lignes de M = 512 points de mesure selon la formule suivante :

$$R_q = \sqrt{\frac{1}{M\,N}\,\sum_{x=1}^{N}\sum_{y=1}^{M}\big(z(x,y) - \bar{z}(N,M)\big)^2}\ .$$

Les mesures ont été réalisées en mode contact intermittent (tapping mode) avec une sonde de type Bruker NCHV, en Silicium dopé à l'antimoine, de raideur k entre 20 et 80 N/m, avec une fréquence de résonance entre 334 et 401 kHz et dont le rayon nominal de la pointe est de 10 nm.

La couche fonctionnelle confère la valeur de faible émissivité au vitrage et donc l'effet anti-buée. L'épaisseur choisie de la couche fonctionnelle permet d'obtenir ensemble avec la sous-couche des couleurs en réflexion neutres et particulièrement stables angulairement. De l'épaisseur choisie résulte aussi une transmission plus élevée en comparaison avec les produits anti-buée connus qui ont une épaisseur de couche fonctionnelle plus élevée. En gardant une émissivité entre 0.20 et 0.50, préférentiellement entre 0.20 et 0.40 et encore plus préférentiellement entre 0.20 et 0.30 l'effet anti-buée reste quasiment le même que pour les produits anti-buée connus qui ont une émissivité plus élevée.

On a trouvé que grâce à la sélection particulière d'une épaisseur comprise entre 160nm et 190nm, préférentiellement entre 160nm et 180nm pour cette couche, une rugosité $R_q$ inférieure ou égale à 7nm, sans mise en œuvre particulière ou traitement particulier de la couche fonctionnelle pouvait être atteinte. Ce niveau de rugosité est proche de celui d'une couche fonctionnelle de $SnO_2$:F d'épaisseur comprise entre 300 et 500 nm ayant subi une étape de traitement supplémentaire, par exemple une étape de polissage.

Le Demandeur a pu montrer que la rugosité des couches fonctionnelles selon l'invention, contrairement aux couches anti-buée déjà connues, peut être amenée à un niveau encore plus bas en ayant par exemple recours à des mises en œuvre particulières de cette couche ou des étapes de traitement particulières. La couche fonctionnelle peut ainsi atteindre des valeurs de $R_q$ inférieures ou égales à 7nm, préférentiellement inférieures ou égales à 6nm, préférentiellement inférieures ou égales à 5 nm

Ainsi, dans un mode de réalisation de l'invention, la rugosité peut être réduite davantage en incluant une présence d'un oxydant autre que l'eau, l'air ou l'oxygène, par exemple l'ozone, le $HNO_3$ ou le HClO, dans le procédé de dépôt du $SnO_2$:F, dont l'effet est « d'araser » ou d'aplanir la rugosité de cette couche, selon l'enseignement de WO 2010/107998. On peut obtenir ainsi une rugosité $R_q$ qui ne dépasse pas 6nm.

Dans un autre mode de réalisation, utilisé seul ou en combinaison avec le mode de réalisation précédent, un niveau particulièrement faible de rugosité de l'empilage est obtenu suite à une étape de polissage appliquée directement sur une ligne float ou sur une ligne de polissage séparée. On peut obtenir ainsi une rugosité $R_q$ qui ne dépasse pas 5.5nm .

Grâce à cette faible rugosité, obtenue avec ou sans mise en œuvre particulière ou traitement particulier de la couche fonctionnelle, la sensibilité au contact avec des pièces métalliques est particulièrement réduite.

En plus la faible rugosité, obtenue avec ou sans mise en œuvre particulière ou traitement particulier de la couche fonctionnelle, a pour effet de réduire le niveau de voile à un niveau inférieur ou égal à 0.5, voire inférieur ou égal à 0.3, voire inférieur ou égal à 0.2% et de limiter fortement la sensibilité de la couche aux salissures.

Le niveau de voile (Haze) a été mesuré suivant la norme ASTM D 1003. La valeur indiquée est le pourcentage de la lumière incidente qui est dévié en passant à travers le substrat verrier.

Le procédé de fabrication d'un substrat anti-buée comprend d'abord une étape de dépôt par CVD sur une feuille de verre d'une sous-couche neutralisante. Cette sous-couche peut être constituée d'une seule couche ou d'une double sous-couche. Le dépôt de la sous-couche est suivi du dépôt d'une couche basse émissive, constituée essentiellement d'oxyde d'étain dopé au fluor. Les différentes couches de l'empilage peuvent être déposées directement sur le verre lors de sa production sur une ligne float ou sur une ligne de dépôt de couches séparée.

La phase gazeuse employée pour le dépôt par CVD de la couche d'oxyde d'étain dopée au fluor peut comporter avantageusement de l'acide inorganique dans les précurseurs, tel que HClO ou $HNO_3$. En fait il s'est avéré que l'ajout d'un tel acide inorganique, particulièrement d'un oxydant augmente la transmission de la couche et en diminue la rugosité.

Les étapes de dépôt des différentes couches peuvent être suivies d'une ou plusieurs étapes de polissage. Ce polissage peut se faire sur une ligne float, sur une ligne de dépôt de couches ou sur une ligne de polissage séparée.

Le procédé de fabrication des vitrages selon l'invention peut comporter une étape de trempe.

Dans le vitrage multiple, deux, trois ou quatre feuilles de verre sont assemblées avec des espaces intermédiaires entre chaque feuille de verre. Les faces des feuilles de verre dans un vitrage multiple sont traditionnellement numérotées en commençant par celle tournée vers l'extérieur du bâtiment ou du véhicule. Le verre le plus extérieur du vitrage isolant porte sur la face tournée vers l'extérieur un revêtement anti-buée selon l'invention. Dans le cas d'un bâtiment le revêtement se trouve donc en position 1.

Nous conserverons cette numérotation tout en sachant que dans le cas des meubles frigorifiques et congélateurs le vitrage est orienté avec le revêtement anti-buée exposée au froid, c'est-à-dire en dernière position selon la numérotation classique.

Le verre le plus extérieur du vitrage isolant multiple peut aussi être un vitrage feuilleté comprenant deux substrats verriers unis par une feuille intercalaire du type thermoplastique. Dans ce cas le revêtement anti-buée se trouve sur la face tournée vers l'extérieur du vitrage feuilleté.

Le vitrage feuilleté peut aussi être utilisé tel quel, par exemple dans des applications automobiles.

Dans un mode de réalisation avantageux au moins une des faces d'une ou plusieurs feuilles de verre orientées vers un espace intermédiaire est recouverte d'un empilage de couches minces comportant au moins une couche fonctionnelle ayant des propriétés de réflexion des longueurs d'onde dans l'infrarouge et/ou dans le domaine du rayonnement solaire, par exemple un revêtement à basse émissivité ou un revêtement de contrôle solaire. Ces vitrages multiples forment alors un vitrage multiple qui allie une bonne isolation thermique, un effet anti-buée et une transmission élevée.

La couche fonctionnelle ayant des propriétés de réflexion des longueurs d'onde dans l'infrarouge et/ou dans le domaine du rayonnement solaire peut être une couche à base d'oxyde de métal tel que l'indium, l'étain ou le zinc. La couche fonctionnelle peut aussi être un multicouche incorporant une ou plusieurs couches d'argent.

Des modes de réalisation particuliers de l'invention vont à présent être décrits, en tant qu'exemples.

Les exemples selon l'invention 2 à 5 ainsi que les exemples comparatifs 2 et 3 sont des substrats verriers portant des revêtements anti-buée qui ont été réalisés par dépôt CVD d'une sous-couche SiOx et d'une couche fonctionnelle $SnO_2$:F sur des substrats verriers en verre clair ou verre extra-clair de 3.9mm d'épaisseur. Le dépôt de la couche fonctionnelle $SnO_2$:F s'est fait avec ou sans l'ajout de l'oxydant $HNO_3$ aux précurseurs. Pour les exemples 2 à 5 et pour l'exemple comparatif 3, le dépôt des couches a été suivi d'une étape de polissage. L'exemple comparatif 1 ne porte pas de revêtement anti-buée. Les exemples comparatifs 2 et 3 sont représentatifs de produits actuellement disponibles dans le commerce.

Le tableau 1 indique pour chaque exemple les épaisseurs des couches, le substrat verrier utilisé, la rugosité et les propriétés optiques obtenues.

Tableau 1

| | Exemple 1 | Exemple 2 | Exemple 3 | Exemple 4 | Exemple 5 | Exemple Comparatif 1 | Exemple comparatif 2 | Exemple comparatif 3 |
|---|---|---|---|---|---|---|---|---|
| Substrat verrier | clair | clair | clair | extra-clair | extra-clair | clair | clair | clair |
| épaisseur sous-couche | 75 nm | 75 nm | 75 nm | 75 nm | 75 nm | - | 75 nm | 75 nm |
| épaisseur SnO2:F | 180 nm | 180 nm | 160 nm | 160 nm | 180 nm | - | 320 nm | 320 nm |
| addition oxydant | non | non | oui | oui | non | | non | non |
| étape polissage | non | oui | oui | oui | oui | | non | oui |
| émissivité | 0,3 | 0,28 | 0,42 | 0,42 | 0,28 | | 0,14 | 0,14 |
| flou (haze) [%] | 0,20 | 0,15 | 0,15 | 0,15 | 0,15 | | 0,45 | 0,35 |
| rugosité Rq | 11,1nm | 5,2nm | 5,0nm | | | | 14,7nm | 9,0nm |
| Facteur solaire g (EN410) | 80,3 | 79,2 | 80,7 | 84,8 | 83,2 | | 76,5 | 76,5 |
| TL (D65, 2°) [%] | 83,9 | 83,4 | 84,1 | 85,6 | 84,9 | | 82,2 | 82,4 |
| a* T (D65, 10°) | -0,3 | -0,6 | -0,8 | 0,0 | 0,2 | | 0,3 | -0,1 |
| b* T (D65, 10°) | 1,8 | 2,1 | 2,7 | 2,6 | 2,0 | | 2,5 | 2,4 |
| a* RC($\alpha$=10°) (D65, 10°) | -2,5 | -1,7 | -1,0 | -0,8 | -1,5 | | -4,4 | -3,3 |
| b* RC($\alpha$=10°) (D65, 10°) | -2,2 | -2,3 | -5,9 | -5,9 | -2,3 | | -1,7 | -0,1 |
| $\Delta$a*b*(75°) (D65, 10°) | 2,4 | 0,7 | 1,7 | 1,7 | 0,7 | | 3,9 | 3,6 |

Il apparaît clairement que tous les exemples selon l'invention montrent une transmission lumineuse (TL) et un facteur solaire (g) largement supérieurs à ceux des exemples comparatifs portant une couche anti-buée.

Sans aucune mise en œuvre particulière pour réduire la rugosité, une couche anti-buée selon l'invention (exemple 1) montre une rugosité $R_q$ proche de celle d'un produit anti-buée classique ayant subi une étape de polissage (exemple comparatif 3). Par l'addition d'un oxydant tel que le $HNO_3$ aux précurseurs lors du dépôt de la couche $SnO_2$:F et par une étape de polissage, des rugosités $R_q$ extrêmement basses sont obtenues.

Ainsi on arrive à descendre le niveau de voile à des valeurs allant de 0.1% à 0.2%. La couleur en réflexion des exemples selon l'invention est non seulement neutre, mais présente aussi une forte stabilité angulaire avec des valeurs de $\Delta$a*b*$_{(75°)}$ en dessous de 3, voire en dessous de 2.

Le tableau 2 montre les propriétés optiques de différents simples vitrages de 3.9mm d'épaisseur avec différentes épaisseurs de $SnO_2$:F. Ces valeurs ont été obtenues avec l'outil de simulation optique 'CODE thin film analysis and design, version 3.37' de W.Theiss, Hard- and Software for Optical Spectroscopy.

Tableau 2

| | Exemple Comparatif 4 | Exemple Comparatif 5 | Exemple 6 | Exemple 7 |
|---|---|---|---|---|
| Substrat verrier | clair | clair | clair | clair |
| épaisseur sous-couche | 75 nm | 75 nm | 75 nm | 75 nm |
| épaisseur $SnO_2$:F | 100 nm | 250 nm | 140 nm | 200 nm |
| simple vitrage | | | | |
| Facteur solaire g (EN410) | 80,6 | 77,0 | 80,1 | 78,5 |
| TL (D65, 2°) | 85,8 | 83,7 | 85,2 | 82,8 |
| a* T (D65, 10°) | 0,3 | 1,9 | -3,0 | -1,1 |
| b* T (D65, 10°) | -3,2 | -1,4 | -2,2 | 0,8 |
| a* RC($\alpha$=10°) (D65, 10°) | 0,4 | 2,1 | -2,9 | 1,0 |
| b* RC($\alpha$=10°) (D65, 10°) | -3,2 | -1,4 | -2,4 | 0,2 |
| $\Delta$a*b*(75°) (D65, 10°) | 3,6 | 3,3 | 3,0 | 2,4 |

La couleur en réflexion des exemples 6 et 7 selon l'invention est non seulement neutre, mais présente aussi une forte stabilité angulaire avec des valeurs de $\Delta$a*b*$_{(75°)}$ maximales de 3, alors que les variations angulaires de la couleur en réflexion sont plus fortes pour les exemples comparatifs 4 et 5 dont l'épaisseur de $SnO_2$:F est trop faible ou trop forte.

Plusieurs vitrages multiples ont été réalisés en utilisant les substrats verriers des exemples 1 à 5 et des exemples comparatifs 1 à 3 comme verre le plus extérieur et un ou deux substrats de verres clairs ayant une épaisseur respective de 4 mm. Les substrats verriers sont séparés l'un de l'autre de 15 mm avec un remplissage d'argon à 90%. Le double vitrage A porte en position 2, c'est-à-dire sur la face tournée vers l'intérieur du verre le plus extérieur, un revêtement à basse émissivité commercialisé par AGC Glass Europe sous le nom TopN+. Le double vitrage B porte en position 2 un revêtement à basse émissivité antisolaire commercialisé par AGC Glass Europe sous le nom EnergyN. Le double vitrage C porte en position 3 un revêtement à basse émissivité antisolaire commercialisé par AGC Glass Europe sous le nom TopN+. Le triple vitrage D porte un revêtement à basse émissivité, commercialisé par AGC Glass Europe sous le nom Tri, en position 2 et en position 5, c'est-à-dire sur la face tournée vers l'intérieur du verre le plus extérieur et sur la face tournée vers l'extérieur du verre le plus intérieur. Le triple vitrage E porte un revêtement à basse émissivité, commercialisé sous le nom TopN+, en position 2 et en position 5, c'est-à-dire sur la face tournée vers l'intérieur du verre le plus extérieur et sur la face tournée vers l'extérieur du verre le plus intérieur.

La couche anti-buée se trouve en position 1, c'est-à-dire sur la face tournée vers l'extérieur du verre le plus extérieur. Les propriétés optiques de ces vitrages sont indiquées dans le tableau 3.

Dans ces vitrages multiples, la comparaison de l'exemple comparatif 1 avec les exemples comparatifs 2 ou 3 montre que l'ajout d'une couche anti-buée classique réduit fortement la transmission lumineuse et le facteur solaire. Par contre les exemples selon l'invention 1 à 5 montrent une transmission lumineuse et un facteur solaire beaucoup plus élevés. En utilisant un substrat verrier tel que les exemples 5 ou 6 comme verre extérieur on arrive presque aux mêmes valeurs de transmission et de facteur solaire que pour un vitrage multiple sans couche anti-buée. Les substrats verriers selon l'invention permettent donc de rajouter une propriété anti-buée aux vitrages isolants connus sans affecter significativement le niveau de transmission lumineuse et de facteur solaire.

Tableau 3

| verre le plus extérieur | Exemple 1 | Exemple 2 | Exemple 3 | Exemple 4 | Exemple 5 | Exemple Comparatif 1 | Exemple comparatif 2 | Exemple comparatif 3 |
|---|---|---|---|---|---|---|---|---|
| double vitrage A | | | | | | | | |
| Facteur solaire g (EN410) | 52,6 | 51,9 | 52,6 | 55,2 | 54,4 | 55,5 | 51,0 | 51,1 |
| TL (D65, 2°) | 73,4 | 72,9 | 73,6 | 75 | 74,3 | 78,4 | 71,8 | 72,0 |
| a* T (D65, 10°) | -2,2 | -2,5 | -2,6 | -1,9 | -1,8 | -2,8 | -1,7 | -2,0 |
| b* T (D65, 10°) | 4,3 | 4,5 | 5 | 4,9 | 4,4 | 2,9 | 5,0 | 4,9 |
| a* RC(a=10°) (D65, 10°) | -2,1 | -1,6 | -1 | -0,6 | -1,1 | -0,5 | -3,3 | -2,5 |
| b* RC(a=10°) (D65, 10°) | -4,7 | -4,7 | -7,3 | -7,3 | -4,8 | -5,3 | -4,1 | -3,0 |
| double vitrage B | | | | | | | | |
| Facteur solaire g (EN410) | 39,5 | 39,1 | 39,4 | 40,7 | 40,4 | 41,7 | 38,7 | 38,8 |
| TL (D65, 2°) | 66,5 | 66,1 | 66,6 | 67,9 | 67,3 | 70 | 65,1 | 65,2 |
| a* T (D65, 10°) | -3,2 | -3,4 | -3,6 | -2,9 | -2,8 | -3,8 | -2,6 | -3,0 |
| b* T (D65, 10°) | 5,3 | 5,5 | 6 | 5,9 | 5,4 | 4 | 5,9 | 5,8 |
| a* RC(a=10°) (D65, 10°) | -3,1 | -2,5 | -1,9 | -1,6 | -2,2 | -1,5 | -4,5 | -3,7 |
| b* RC(a=10°) (D65, 10°) | -3,9 | -3,9 | -6,8 | -6,8 | -4 | -4,1 | -3,4 | -2,2 |
| double vitrage C | | | | | | | | |
| Facteur solaire g (EN410) | 57,1 | 56,3 | 57,1 | 60,3 | 59,3 | 60,5 | 55,2 | 55,3 |
| TL (D65, 2°) | 73,4 | 72,9 | 73,6 | 75,0 | 74,3 | 78,4 | 71,8 | 72,0 |
| a* T (D65, 10°) | -2,2 | -2,4 | -2,6 | -1,9 | -1,7 | -2,8 | -1,6 | -2,0 |
| b* T (D65, 10°) | 4,3 | 4,5 | 5,0 | 4,9 | 4,4 | 2,9 | 4,9 | 4,9 |
| a* RC(a=10°) (D65, 10°) | -1,4 | -0,9 | -0,4 | 0,1 | -0,5 | 0,5 | -2,7 | -1,9 |
| b* RC(a=10°) (D65, 10°) | -5,1 | -5,1 | -7,7 | -7,8 | -5,2 | -5,8 | -4,5 | -3,4 |
| triple vitrage D | | | | | | | | |
| Facteur solaire g (EN410) | 54,9 | 54,1 | 54,9 | 58,1 | 57,2 | 58 | 52,9 | 52,9 |
| TL (D65, 2°) | 65,8 | 65,3 | 65,9 | 67,2 | 66,6 | 70 | 64,2 | 64,4 |
| a* T (D65, 10°) | -2,7 | -3 | -3,1 | -2,4 | -2,3 | -3,3 | -2,2 | -2,5 |
| b* T (D65, 10°) | 4,3 | 4,5 | 5 | 4,9 | 4,4 | 2,9 | 4,9 | 4,8 |
| a* RC(a=10°) (D65, 10°) | -3,3 | -2,9 | -2,5 | -2 | -2,4 | -2,5 | -4,3 | -3,7 |
| b* RC(a=10°) (D65, 10°) | -0,2 | -0,2 | -2,6 | -2,6 | -0,2 | 0,4 | 0,6 | 1,6 |
| triple vitrage E | | | | | | | | |
| Facteur solaire g (EN410) | 44,8 | 44,2 | 44,8 | 46,9 | 46,2 | 47,3 | 43,5 | 43,6 |
| TL (D65, 2°) | 64,4 | 64,0 | 64,6 | 65,8 | 65,2 | 68,6 | 62,9 | 63,1 |
| a* T (D65, 10°) | -3,8 | -4,1 | -4,2 | -3,5 | -3,4 | -4,4 | -3,3 | -3,6 |
| b* T (D65, 10°) | 6,3 | 6,5 | 6,9 | 6,8 | 6,4 | 5,1 | 6,9 | 6,9 |
| a* RC(a=10°) (D65, 10°) | -1,9 | -1,5 | -1,1 | -0,6 | -1,0 | -0,6 | -2,9 | -2,3 |
| b* RC(a=10°) (D65, 10°) | -5,7 | -5,6 | -7,8 | -7,9 | -5,8 | -6,9 | -5,0 | -4,0 |

L'expérience suivante a été faite pour simuler l'apparition de buée sur un vitrage pendant une nuit claire.

Le vitrage simple ou multiple est exposé avec une de ses faces à un environnement chaud d'une température d'environs 20°C qui simule l'intérieur d'un bâtiment. L'autre de ses faces (position 1) à un environnement froid d'une température d'environs 5°C qui simule l'air à l'extérieur du bâtiment. Une plaque portée à -30°C sert à simuler le ciel nocturne.

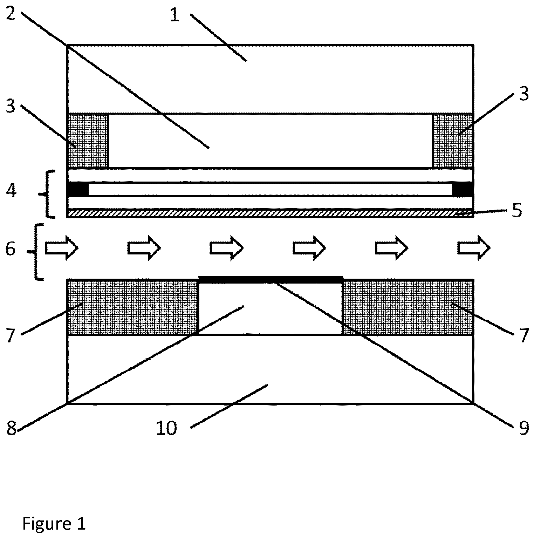

La Figure 1 montre une coupe transversale à travers le milieu du dispositif utilisé pour l'expérience. Ce dispositif est monté à l'intérieur d'une chambre climatique (non représentée).

Le vitrage à tester (4), de dimensions 800mm fois 800mm, est placé avec sa face intérieure à une distance de 4cm d'une plaque chauffante (1) de même dimensions à l'aide d'un espaceur isolant en polystyrène expansé (EPS) (3) qui forme un cadre de même dimension et de 2cm de largeur. Ceci permet de créer un environnement chaud (2) pour porter la température de la face intérieure du vitrage à 20°C. Ceci simule l'intérieur du bâtiment.

Sur la face extérieure du vitrage on place une plaque isolante en EPS (7) à une distance de 4cm. Deux espaceurs isolants en EPS de 2cm de largeur sont placés le long de deux côtés opposés du vitrage pour porter la plaque isolante en EPS (non représentés). Ceci permet de créer un espace à la surface extérieure du vitrage par lequel on fera circuler à vitesse contrôlée l'environnement froid porté à 5°C (6). Cet environnement froid est l'environnement de la chambre climatique dans laquelle est placée le dispositif. Ceci simule l'air à l'extérieur du bâtiment.

Dans le centre de la plaque en EPS posée au-dessus du vitrage se trouve une ouverture carrée de 200mm fois 200mm (8). Cette ouverture est couverte par une feuille majoritairement transparente au rayonnement de grande longueur d'onde (9). Au-dessus de cette ouverture se trouve une plaque portée à -30°C (10) qui sert à simuler le ciel nocturne.

Le dispositif est pré-conditionné pendant 12 heures avec la plaque chauffante portée à 20°C, l'environnement froid porté à 5°C et circulant à la surface du vitrage avec une vitesse comprise entre 0,3 et 1,0 m/s. Le point de rosée de l'environnement froid est fixé à 2.8°C. Pendant la période de pré-conditionnement l'ouverture qui permet l'exposition du vitrage à la plaque froide simulant le ciel nocturne est bouchée par un morceau isolant en EPS.

Après la phase de pré conditionnement le vitrage est exposé à la plaque froide portée à -30°C en enlevant le bouchon de l'ouverture carrée (8) et l'évolution de la température de la surface extérieure est enregistrée à l'aide d'un thermocouple fixé au centre de la face extérieure du vitrage. On observe une chute de la température suivie d'une stabilisation de la température. La température est relevée une fois que la stabilisation est atteinte et la présence de buée à la surface extérieure est vérifiée.

Comme le montrent les résultats de cette expérience dans le tableau ci-dessous, la formation de buée à la surface d'un vitrage isolant est empêchée grâce à la couche à faible émissivité selon l'invention.

Tableau 4

| échantillon | Type de vitrage | Température de surface stabilisée [°C] | présence de buée à la surface extérieure |
|---|---|---|---|
| Exemple comparatif 1 | Double vitrage C | 0,8 | Oui |
| Exemple comparatif 1 | Double vitrage A | 0,9 | Oui |
| Exemple comparatif 3 | Double vitrage C | 4,4 | Non |
| Exemple comparatif 3 | Double vitrage A | 3,8 | Non |
| Exemple 2 | Double vitrage C | 3,7 | Non |
| Exemple comparatif 1 | Triple vitrage E | 0,0 | Oui |

La griffabilité des empilages de couches selon l'invention a été évaluée grâce à un scléromètre. Dans ce test un trait est tiré à la surface de l'échantillon en déplaçant une pointe en carbure de tungstène sur une certaine distance tout en appliquant une certaine force. L'apparition de griffes est évaluée à l'œil nu. Dans ce cas-ci un scléromètre du type Elcometer 3092 a été utilisé. Sur chaque échantillon 5 traits de 10cm de longueur ont été tirés en appliquant une force constante de 20N.

Tableau 5

| | épaisseur $SnO_2$:F | étape polissage | nombre de traits non visibles | nombre de traits légèrement visibles | nombre de traits clairement visibles |
|---|---|---|---|---|---|
| Exemple 1 | 180 nm | non | 0 | 5 | 0 |
| Exemple 2 | 180 nm | oui | 5 | 0 | 0 |
| Exemple Comparatif 2 | 320 nm | non | 0 | 0 | 5 |
| Exemple Comparatif 3 | 320 nm | oui | 2 | 3 | 0 |

Comme le montre le tableau 5 ci-dessus la griffabilité, c'est-à-dire la visibilité des traits, diminue avec le polissage. Sur l'exemple comparatif 2 (non-poli) on a 5 traits sur 5 clairement visibles, sur l'Exemple comparatif 3 (poli) on n'a plus que 3 traits légèrement visibles et 2 traits non visibles. Sur l'exemple 1 (non-poli) on a 5 traits sur 5 légèrement visibles, sur l'Exemple 2 (poli) on n'a aucun trait visible.

Comme le montre le tableau 5 ci-dessus la griffabilité diminue aussi avec l'épaisseur de la couche $SnO_2$:F. Sur l'exemple comparatif 2 (320nm $SnO_2$:F) on a 5 traits sur 5 clairement visibles, sur l'exemple 1 (180nm $SnO_2$:F) on a 5 traits sur 5 légèrement visibles. Sur l'Exemple comparatif 3 (320nm $SnO_2$:F) on n'a que 3 traits légèrement visibles et 2 traits non visibles, sur l'Exemple 2 (180nm $SnO_2$:F) on n'a aucun trait visible.

L'apparition de griffes au test du scléromètre est réduite voire empêchée grâce aux couches selon l'invention. Ceci semble être dû à la rugosité particulièrement basse.

Le coefficient de friction statique et le coefficient de friction dynamique des empilages de couches selon l'invention ont été mesurés selon la norme ISO8295 :1995 avec comme seule différence que la vitesse du mouvement qui induit le frottement était de 25 mm/min. Les coefficients de friction statique et les coefficients de friction dynamique ainsi déterminés sont au moins 20%, voire au moins 30%, voire au moins 40% plus bas pour les empilages selon l'invention que pour un verre non recouvert.

## Revendications

1. Vitrage isolant multiple formé d'au moins deux substrats verriers disposés de façon à former une ou plusieurs cavités entre les substrats, **caractérisé en ce qu'**il comprend un substrat verrier transparent dont une des deux faces porte un revêtement comprenant dans l'ordre: une sous-couche de neutralisation de couleurs en réflexion et une couche fonctionnelle de faible émissivité, constituée essentiellement d'oxyde d'étain dopé au fluor, **caractérisé en ce que** la couche d'oxyde d'étain dopé a une épaisseur comprise entre 160 et 190nm et présente une rugosité $R_q$ inférieure ou égale à 7nm, le substrat verrier étant orienté de sorte que le revêtement se trouve en première position.

2. Vitrage isolant multiple selon la revendication 1, **caractérisé en ce que** la sous-couche est une mono-couche constituée essentiellement d'oxynitrures de silicium, tel que $SiO_xN_y$, ou d'oxycarbures de silicium, tel que $SiO_xC_y$, x étant inférieur à 2, dont l'indice de réfraction est de préférence compris dans la plage allant de 1,65 à 1,75, l'épaisseur de cette couche étant de préférence comprise entre 55 et 95 nm.

3. Vitrage isolant multiple selon la revendication 1 ou 2, **caractérisé en ce que** la sous-couche est une bi-couche constituée de $TiO_2$, disposé sur le verre et revêtu d'une couche d'un oxyde de silicium, oxycarbure de silicium, tel que $SiO_xC_y$, ou oxynitrure de silicium, tel que $SiO_xN_y$, x étant inférieur ou égal à 2, l'épaisseur de $TiO_2$ étant de préférence comprise entre 5nm et 15 nm et celle d'un oxyde, oxycarbure, ou oxynitrure de silicium étant de préférence comprise entre 15nm et 40 nm.

4. Vitrage isolant multiple selon la revendication 1 ou 2, **caractérisé en ce que** la première couche est une bi-couche constituée de $SnO_2$ ou ZnO disposé sur le verre et revêtu d'une couche d'un oxyde, oxycarbure ou oxynitrure de silicium, tel que $SiO_xC_y$ et $SiO_xN_y$ respectivement, x étant inférieur ou égal à 2, l'épaisseur de $SnO_2$ étant de préférence comprise entre 15nm et 35 nm et celle d'un oxyde, oxycarbure, ou oxynitrure de silicium étant de préférence comprise entre 15nm et 40 nm.

5. Vitrage isolant multiple selon la revendication 1 ou 2, **caractérisé en ce que** la sous-couche est une mono-couche mixte notamment constituée essentiellement d'oxydes de Sn et Si, dont l'épaisseur est comprise entre 55 et 95 nm.

6. Vitrage isolant multiple selon l'une des revendications 1 à 5, **caractérisé en ce que** l'épaisseur de la couche fonctionnelle est comprise entre 160 et 180 nm.

7. Vitrage isolant multiple selon l'une des revendications 1 à 6, **caractérisé en ce que** le substrat présente une teneur en fer, exprimé sous forme de $Fe_2O_3$, inférieure à 0,04% en poids, en particulier inférieure à 0,02% en poids.

8. Vitrage isolant multiple selon l'une des revendications 1 à 7, **caractérisé en ce qu'**au moins une des faces de substrats orientées vers une cavité du vitrage multiple est revêtue d'une couche basse émissive.

9. Vitrage isolant multiple selon la revendication 8 **caractérisé en ce que** la couche basse émissive est une couche d'oxyde d'étain dopé.

**10.** Vitrage isolant multiple selon la revendication 9 **caractérisé en ce que** la couche basse émissive est un multicouche à base d'argent.

**Patentansprüche**

**1.** Mehrfachisolierverglasung, die aus mindestens zwei Glassubstraten gebildet ist, die so angeordnet sind, dass ein oder mehrere Hohlräume zwischen den Substraten gebildet werden, **dadurch gekennzeichnet, dass** sie ein transparentes Glassubstrat umfasst, von dem eine der beiden Seiten einen Überzug trägt, der in der Reihenfolge umfasst: eine Teilschicht zur Neutralisierung von Reflexionsfarben und eine niedrigemissive Funktionsschicht, die im Wesentlichen aus fluordotiertem Zinnoxid besteht, **dadurch gekennzeichnet, dass** die Schicht aus dotiertem Zinnoxid eine Dicke zwischen 160 und 190 nm hat und eine Rauheit $R_q$ kleiner oder gleich 7 nm aufweist, wobei das Glassubstrat so ausgerichtet ist, dass sich der Überzug an Position eins befindet.

**2.** Mehrfachisolierverglasung nach Anspruch 1, **dadurch gekennzeichnet, dass** die Teilschicht eine Monoschicht ist, die im Wesentlichen aus Siliciumoxinitriden wie $SiO_xN_y$ oder Siliciumoxicarbiden wie $SiO_xC_y$, wobei x kleiner als 2 ist, besteht und deren Brechungsindex bevorzugt in dem Bereich von 1,65 bis 1,75 liegt, wobei die Dicke dieser Schicht bevorzugt zwischen 55 und 95 nm liegt.

**3.** Mehrfachisolierverglasung nach Anspruch 1 oder 2, **dadurch gekennzeichnet, dass** die Teilschicht eine Bischicht ist, die aus $TiO_2$ besteht, das auf dem Glas angeordnet ist und mit einer Schicht aus einem Siliciumoxid, Siliciumoxicarbid wie $SiO_xC_y$ oder Siliciumoxinitrid wie $SiO_xN_y$, wobei x kleiner oder gleich 2 ist, überzogen ist, wobei die Dicke von $TiO_2$ bevorzugt zwischen 5 nm und 15 nm liegt und die eines Siliciumoxids, -oxicarbids oder -oxinitrids bevorzugt zwischen 15 nm und 40 nm liegt.

**4.** Mehrfachisolierverglasung nach Anspruch 1 oder 2, **dadurch gekennzeichnet, dass** die erste Schicht eine Bischicht ist, die aus $SnO_2$ oder ZnO besteht, das auf dem Glas angeordnet ist und mit einer Schicht aus einem Siliciumoxid, -carbid oder -oxinitrid wie $SiO_xC_y$ beziehungsweise $SiO_xN_y$, wobei x kleiner oder gleich 2 ist, überzogen ist, wobei die Dicke von $SnO_2$ bevorzugt zwischen 15 nm und 35 nm liegt und die eines Siliciumoxids, - oxicarbids oder -oxinitrids bevorzugt zwischen 15 nm und 40 nm liegt.

**5.** Mehrfachisolierverglasung nach Anspruch 1 oder 2, **dadurch gekennzeichnet, dass** die Teilschicht eine gemischte Monoschicht ist, die insbesondere im Wesentlichen aus Oxiden von Sn und Si besteht und deren Dicke zwischen 55 und 95 nm liegt.

**6.** Mehrfachisolierverglasung nach einem der Ansprüche 1 bis 5, **dadurch gekennzeichnet, dass** die Dicke der Funktionsschicht zwischen 160 und 180 nm liegt.

**7.** Mehrfachisolierverglasung nach einem der Ansprüche 1 bis 6, **dadurch gekennzeichnet, dass** das Substrat einen Eisengehalt, ausgedrückt in Form von $Fe_2O_3$, von weniger als 0,04 Gew.-%, insbesondere weniger als 0,02 Gew.-% aufweist.

**8.** Mehrfachisolierverglasung nach einem der Ansprüche 1 bis 7, **dadurch gekennzeichnet, dass** mindestens eine der Seiten von Substraten, die zu einem Hohlraum der Mehrfachverglasung hin ausgerichtet sind, mit einer niedrigemissiven Schicht überzogen ist.

**9.** Mehrfachisolierverglasung nach Anspruch 8, **dadurch gekennzeichnet, dass** die niedrigemissive Schicht eine Schicht aus dotiertem Zinnoxid ist.

**10.** Mehrfachisolierverglasung nach Anspruch 9, **dadurch gekennzeichnet, dass** die niedrigemissive Schicht eine Multischicht auf Silberbasis ist.

**Claims**

**1.** Multiple insulating glazing formed of at least two glass substrates disposed so as to form one or more cavities between the substrates, **characterized in that** it comprises a transparent glass substrate of which one of the two faces bears a coating comprising in order: a sublayer for neutralizing colours in reflection and a low-emissivity functional layer consisting essentially of fluorine-doped tin oxide, **characterized in that** the doped tin oxide layer has a thickness of between 160 and 190 nm and has a roughness $R_q$ of less than or equal to 7 nm, the glass substrate being oriented such that the coating is in first position.

2. Multiple insulating glazing according to Claim 1, **characterized in that** the sublayer is a monolayer consisting essentially of silicon oxynitrides, such as $SiO_xN_y$, or silicon oxycarbides, such as $SiO_xC_y$, x being less than 2, having a refractive index preferably within the range from 1.65 to 1.75, the thickness of this layer being preferably between 55 and 95 nm.

3. Multiple insulating glazing according to Claim 1 or 2, **characterized in that** the sublayer is a bilayer consisting of $TiO_2$, disposed on the glass and coated with a layer of a silicon oxide, silicon oxycarbide, such as $SiO_xC_y$, or silicon oxynitride, such as $SiO_xN_y$, x being less than or equal to 2, the thickness of $TiO_2$ being preferably between 5 nm and 15 nm and that of a silicon oxide, oxycarbide or oxynitride being preferably between 15 nm and 40 nm.

4. Multiple insulating glazing according to Claim 1 or 2, **characterized in that** the first layer is a bilayer consisting of $SnO_2$ or ZnO, disposed on the glass and coated with a layer of a silicon oxide, oxycarbide or oxynitride, such as $SiO_xC_y$ and $SiO_xN_y$ respectively, x being less than or equal to 2, the thickness of $SnO_2$ being preferably between 15 nm and 35 nm and that of a silicon oxide, oxycarbide or oxynitride being preferably between 15 nm and 40 nm.

5. Multiple insulating glazing according to Claim 1 or 2, **characterized in that** the sublayer is a mixed monolayer in particular consisting essentially of oxides of Sn and Si, with a thickness of between 55 and 95 nm.

6. Multiple insulating glazing according to any of Claims 1 to 5, **characterized in that** the thickness of the functional layer is between 160 and 180 nm.

7. Multiple insulating glazing according to any of Claims 1 to 6, **characterized in that** the substrate has a content of iron, expressed in the form of $Fe_2O_3$, of less than 0.04% by weight, more particularly less than 0.02% by weight.

8. Multiple insulating glazing according to any of Claims 1 to 7, **characterized in that** at least one of the substrate faces oriented towards a cavity of the multiple glazing is coated with a low-emissivity layer.

9. Multiple insulating glazing according to Claim 8, **characterized in that** the low-emissivity layer is a doped tin oxide layer.

10. Multiple insulating glazing according to Claim 9, **characterized in that** the low-emissivity layer is a silver-based multilayer.

Figure 1

**EP 3 008 025 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2973023
- US 20100255225 A
- US 4419386 A
- US 20050196623 A
- US 4377613 A
- US 4187336 A
- WO 2010107998 A

**Littérature non-brevet citée dans la description**

- **A. WERNER ; A. ROOS.** *Optical Materials,* 2008, vol. 30, 968-978